# EUROPÄISCHE PATENTANMELDUNG

(11) **EP 0 983 898 A1**
(43) Veröffentlichungstag der Anmeldung: **08.03.2000**
(21) Anmeldenummer: 99116535.8
(22) Anmeldetag: 24.08.1999
(51) Int. Cl.: B60P 1/02

(54) **Transportfahrzeug**

(30) Priorität: 02.09.1998 DE 19839981
(71) Anmelder: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(57) **Zusammenfassung**

Bei einem Transportfahrzeug mit einem über ein Fahrwerk gegen den Boden abgestützten, in der Draufsicht im Wesentlichen U-förmigen, nach hinten offenen Chassis (3) und einer vermittels einer insbesondere durch Parallelogrammhebelpaare (4,5) gebildeten, antreibbaren Hubeinrichtung an dieses angeschlossenen, aus zwei formschlüssig zusammenfügbaren und in der zusammengefügten Lage eine starre Einheit bildenden Teilen gebildeten Lasttrageinrichtung, welche vermittels um horizontale Achsen schwenkbarer Hubhebel (4,5) zwischen einer auf den Boden abgesenkten Lastaufnahmestellung und einer angehobenen Fahrstellung hin und her bewegbar ist, und bei dem der das erste Teil der Lasttrageinrichtung bildender U-förmige Rahmen (6) wenigstens hinsichtlich seiner Längsschenkel aus einem ersten Profilmaterial besteht und die das zweite Teil (7) der Lasttrageinrichtung bildende Lastplattform (8) mit einem wenigstens teilweise umlaufenden Rahmen (9) aus einem zum Profilmaterial der Längsschenkel des U-förmigen Rahmens (6) komplementärenzweiten Profilmaterial versehen ist, wird zur Herstellung eines optimalen verbandes aus den beiden die Lasttrageinrichtung bildenden Profilen vorgeschlagen, daß die Längsschenkel des U-förmigen Rahmens aus Längenabschnitten eines eine annähernd U-förmige (6) Querschnittsform aufweisenden Profilmaterials und die deren Längsseiten bildenden Teile des Rahmens der Lastplattform (8) Längenabschnitten eines eine unsymmetrisch C-förmige Querschnittsform aufweisenden Profilmaterials bestehen.

## Beschreibung

Die Erfindung bezieht sich aufein Transportfahrzeug mit einem über ein Fahrwerk gegen den Boden abgestützten, in der Draufsicht im Wesentlichen U-förmigen, nach hinten offenen Chassis und einer vermittels einer insbesondere durch Parallelogrammhebelpaare gebildeten, antreibbaren Hubeinrichtung an dieses angeschlossenen, aus zwei formschlüssig zusammenfügbaren und in der zusammengefügten Lage eine starre Einheit bildenden Teilen gebildeten Lasttrageinrichtung, wobei die Lasttrageinrichtung vermittels um horizontale Achsen schwenkbarer Hubhebel zwischen einer auf den Boden abgesenkten Lastaufnahmestellung und einer angehobenen Fahrstellung hin und her bewegbar ist, und wobei der das erste Teil der Lasttrageinrichtung bildender U-förmige Rahmen wenigstens hinsichtlich seiner Längsschenkel aus einem Profilmaterial besteht und die das zweite Teil der Lasttrageinrichtung bildende Lastplattform mit einem wenigstens teilweise umlaufenden Rahmen aus einem zum Profilmaterial der Längsschenkel des U-förmigen Rahmens komplementären Profilmaterial versehen ist.

Ein Transportfahrzeug dieser Bauart ist aus dem EP-OS 0 763 445 bekannt und zeichnet sich in besonderer Weise dadurch aus, daß die Last selbst die Aussteifung eines Fahrzeugteiles, hier zunächst der Lasttrageinrichtung und in der Folge auch des Chassis des Fahrzeuges bildet, so daß der fahrzeuggebundene Teil der Lasttrageinrichtung leichter ausgebildet sein und damit das Eigengewicht des Fahrzeuges verringert werden kann. Zugleich ermöglicht die zweiteilige Ausbildung der Lasttrageinrichtung auch eine Vereinfachung der Aufnahme der Last, in der Weise, daß die Last nicht mehr auf eine fahrzeuggebundene Plattform oder ähnliches aufgesetzt werden muß, sondern mit entsprechend gestallteten Verbindungsmitteln ausgestattet mittels des Fahrzeuges bzw. des fahrzeuggebundenen Teiles der Lasttrageinrichtung aus einer auf dem Boden abgestellten Parkstellung heraus vom Boden weg aufgenommen werden kann. In Verbindung mit dieser Art der Aufnahme der Last durch das Fahrzeug bietet sich naturgemäß auch die Verwendung des Fahrzeuges zur wechselweise aufeinanderfolgenden Aufnahme verschiedener Lasten an. Die nach hinten offene Gestaltung von Chassis und fahrzeugseitigem Teil der Lasttrageinrichtung gestattet es dabei das Fahrzeug bei abgesenktem fahrzeugseitigen Teil der Lasttrageinrichtung in einer solchen Weise an die Last heranzufahren, daß der fahrzeugseitige Teil der Lasttrageinrichtung diese zunehmend umfassend auf die Last bzw. deren Verbindungsmittel aufgeschoben wird, bis die Last vollständig vom fahrzeugseitigen Teil der Lasttrageinrichtung erfaßt ist und in die Fahrstellung angehoben werden kann.
Eine leichtes Aufnehmen der Lastplattform und damit der Last setzt aber voraus, daß Lasttrageinrichtung und Lastplattform in einfacher Weise miteinander verbunden werden, insbesondere durch an beiden Teilen ausgebildete komplementäres Profilform, welche sich beispielsweise leicht ineinanderschieben lassen. Eine gegenseitige Aussteifung einerseits der beiden Teile einer Lasttrageinrichtung und andererseits des gesamten Fahrzeugchassis setzt zudem voraus, daß die ineinandergreifenden Profilformen von Lastplattform und Lasttrageinrichtung in der gegenseitigen Eingriffslage einen möglichst einheitlichen Verband bilden.

Ausgehend von diesem Stand der Technik liegt der Erfindung die Aufgabe zugrunde bei einem Transportfahrzeug der eingangs bezeichneten Bauart die Elemente der Lasttrageinrichtung dahingehend weiter zu verbessern, daß einerseits ein leichtes Ineinanderführen der miteinander in Eingriff zu bringenden Profilformen gewährleistet, andererseits aber zugleich die ineinandergeschachtelten Profilformen einen optimaler Verbund bilden können.

Diese Aufgabe wird erfindungsgemäß im Wesentlichen dadurch gelöst, daß die Längsschenkel des U-förmigen Rahmens aus Längenabschnitten eines eine annähernd U-förmige Querschnittsform aufweisenden Profilmaterials und die deren Längsseiten bildenden Teile des Rahmens der Lastplattform Längenabschnitten eines eine unsymmetrisch C-förmige Querschnittsform aufweisenden Profilmaterials bestehen. Unter Berücksichtigung eines hinreichenden Spieles lassen sich diese beiden Profilformen auf der einen Seite in einer höchst einfachen Weise ineinanderschieben und bilden auf der anderen Seite im ineinandergeschobenen Zustand einen nahezu optimalen Verbund, weil im ineinandergeschachtelten Zustand die eingreifende Profilform nahezu vollständig von der übergreifenden Profilform umgriffen ist. Zudem zeichnen sich die beiden Profilformen durch eine große Einfachheit aus, so daß eine praktische Anwendung zugleich auch zu einer Kosten und Gewichtsverminderung führt.

In einer bevorzugten Verwirklichungsform einer aus einander zu einem Verbund ergänzenden Profilformen gebildeten Lasttrageinrichtung ist vorgesehen, daß das die Längsschenkel des U-förmigen Rahmens bildende annähernd U-förmige Profilmaterial einen längeren die Tragfähigkeit des Profiles bestimmenden und einen kürzeren zum Eingriff in das unsymmetrisch C-förmige Profil des Rahmens der Last bestimmten Profilschenkel aufweist.
Typisch für diese bevorzugte Verwirklichungsform ist zugleich die Ausbildung des komplementären Profiles dahingehend, daß die unsymmetrisch C-förmige Querschnittsform des die Längsseiten des Rahmens der Lastplattform bildenden Profilmaterials durch eine zumindest schlitzförmige Ausnehmung im unteren Bereich der bezüglich des Körpers Lastplattform außenliegenden Seitenwand eines rechteckigen oder quadratischen Hohlprofiles gebildet ist. Diese Ausbildung gestattet zunächst ein leichtes ineinanderschieben der beiden Profile bei auf dem Boden aufliegender Lastplattform und auf den Boden abgesenktem Lasttragrahmen, da der auf dem Boden aufliegende Profilgrund des Rahmens der Lasttrageinrichtung in die bodennahe Schlitzöffnung des Profiles des Rahmens der Lastplattform einlaufen kann.

Daraus resultiert im Weiteren die in erster Linie hinsichtlich einer Gewichtsoptimierung und sodann auch noch hinsichtlich einer gegenseitigen Fixierung der ineinandergreifenden Profilformen zweckmäßigste Ausbildung der annähernd Unförmigen Profilform des Rahmens der Lasttrageinrichtung dahingehend, daß das die Längsschenkel des U-förmigen Rahmens bildende annähernd U-förmige Profilmaterial aus zwei Profilmaterialabschnitten zusammengesetzt ist, in der Weise, daß der längere Profilschenkel zusammen mit dem Profilgrund der U-förmigen Profilquerschnittsform durch ein einteilig ausgebildetes, massives Winkelprofilmaterial und der kürzeres zum Eingriffin das C-förmige Profil des Rahmens der Lastplattform bestimmte Profilschenkel durch ein an den freien Profilschenkel des Winkelprofilmaterials angeschlossenes Hohlprofil gebildet sind.

Im Einzelnen kann dabei vorgesehen sein, daß der kürzere an den freien Profilschenkel des Winkelprofilmaterials angeschlossene Profilschenkel durch ein hochkantstehend ausgerichtetes Hohlprofilmaterial mit rechteckigem Profilquerschnitt gebildet ist.

Ausgehend von einer Ausgestaltung bei der die bestimmungsgemäß ineinandergreifenden Profile einerseits des U-förmigen Rahmens der Lasttrageinrichtung und andererseits des Rahmens der Lastplattform mit einem großen Übermaß ineinandergreifen sind die ineinandergreifenden Profile in weiterer Ausgestaltung der Erfindung wechselweise mit Mitteln zum gegenseitigen Ausrichten in ihrer Eingriffslage ausgestattet sind. Im Einzelnen ist dabei zweckmäßigerweise vorgesehen, daß die Mittel zum gegenseitigen Ausrichten der Profile von Rahmen der Lasttrageinrichtung und Rahmen der Lastplattform durch insbesondere keilförmig ansteigende Rampen gebildet und vom einen zum anderen Ende des Rahmens der Lasttrageinrichtung hin jeweils wechselweise an der Innenseite und der Außenseite der ineiandergreifenden Profilformen angeordnet sind.

In weiterer Ausbildung einer zur Herstellung eines sicheren Verbundes geeigneten Profilkombination ist nach einem weiteren Merkmal der Erfindung vorgesehen, daß die ineinandergreifenden Profilformen von Rahmen der Lasttrageinrichtung und Rahmen der Lastplattform in ihrer gegenseitigen Eingriffslage durch mechanische Mittel zumindest in einer horizontalen Ebene gesichert sind.

In einer bevorzugten Ausgestaltung dieser Ausbildungsweise kann vorgesehen sein, daß die mechanischen Mittel zum Sichern der ineinandergreifenden Profilformen von Rahmen der Lasttrageinrichtung und Rahmen der Lastplattform in ihrer gegenseitigen Eingriffslage durch vermittels Druckmittelzylinder angetriebene Stufenzapfen gebildet sind.

In weiterer Einzelausgestaltung der vorgenannten Ausbildungsweise ist zusätzlich bzw. vervollständigend vorgesehen, daß die mechanischen Mittel bildenden Stufenzapfen jeweils mit einem Schaftteil eine Ausnehmung in der oberen Profilquerwandung des den Rahmen der Lastplattform bildenden Profiles durchgreifenden und zur Festlegung der miteinander im Eingriffbefindlichen Profile in vertikaler Richtung mit einer ringförmigen Stirnfläche auf dem den kürzeren Profilschenkel des Lasttragrahmens bildenden Hohlprofil aufsitzen und zur Festlegung der miteinander im Eingriffbefindlichen Profile in horizontaler Richtung mit einem zapfenförmigen Fortsatz in das den kürzeren Profilschenkel des Lasttragrahmens bildende Hohlprofil eingreift.

Die Erfindung ist in der nachfolgenden Beispielsbeschreibung anhand einiger in der Zeichnung dargestellter Ausführungsbeispiele im Einzelnen beschrieben. In der Zeichnung zeigt die
- Figur 1: eine Seitenansicht eines Transportfahrzeuges mit in die Fahrstellung angehobener Lastplattform;
- Figur 2: eine Draufsicht zu Figur 1;
- Figur 3: eine Draufsicht auf den Lasttragrahmen des Transportfahrzeuges;
- Figur 4: einen Schnitt durch einen Schenkel des Lasttragrahmens;
- Figur 5: eine Seitenansicht des Lasttragrahmens;
- Figur 6: eine Draufsicht die Lastplattform des Transportfahrzeuges;
- Figur 7: einen Teilschnitt durch die Lastplattform;
- Figur 8: eine Seitenansicht der Lastplattform;
- Figur 9: eine Darstellung der Profilformen nach Figur 4 und 7 in ihrer gegenseitigen Eingriffslage;
- Figur 10: eine Seitenansicht eines in der Lösestellung befindlichen Mittels zum Sichern der ineinandergreifenden Profilformen der Lasttrageinrichtung des Transportfahrzeuges;
- Figur 11: eine Seitenansicht eines in der Sicherungsstellung befindlichen Mittels zum Sichern der ineinandergreifenden Profilformen der Lasttrageinrichtung des Transportfahrzeuges;
- Figur 12: eine Draufsicht zu Figur 10 bzw. 11.

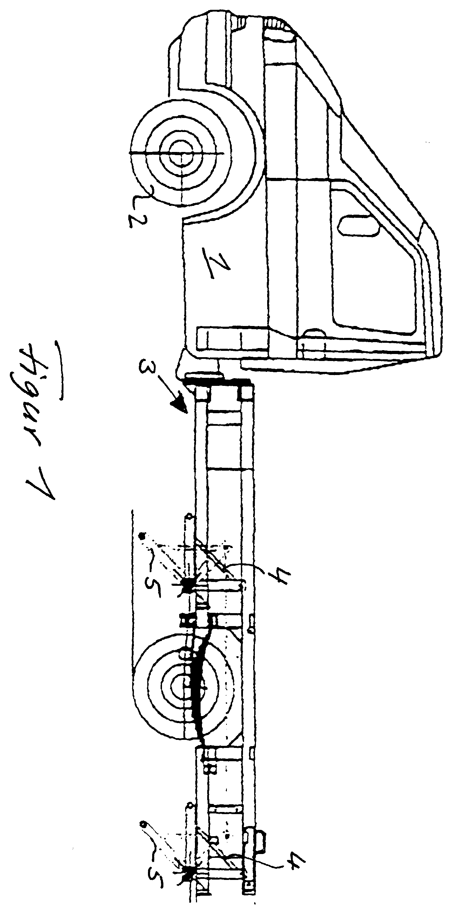

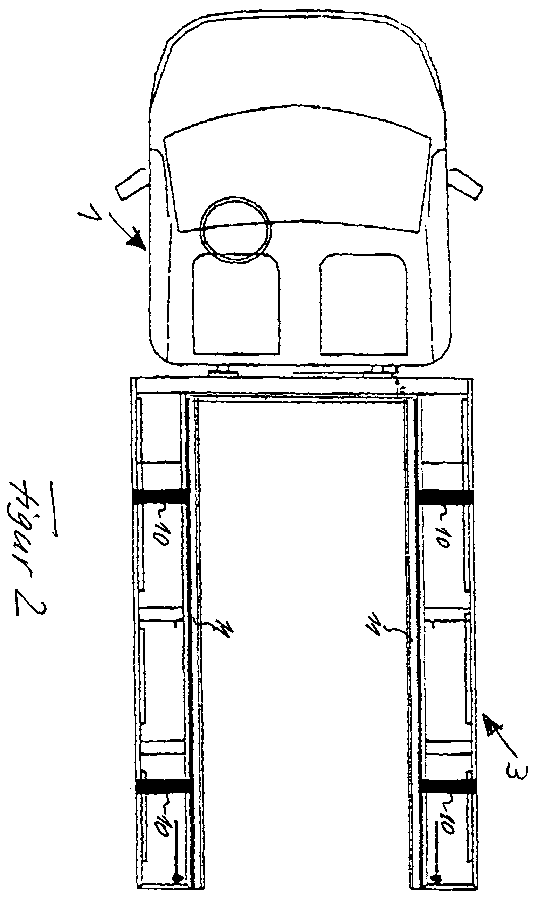

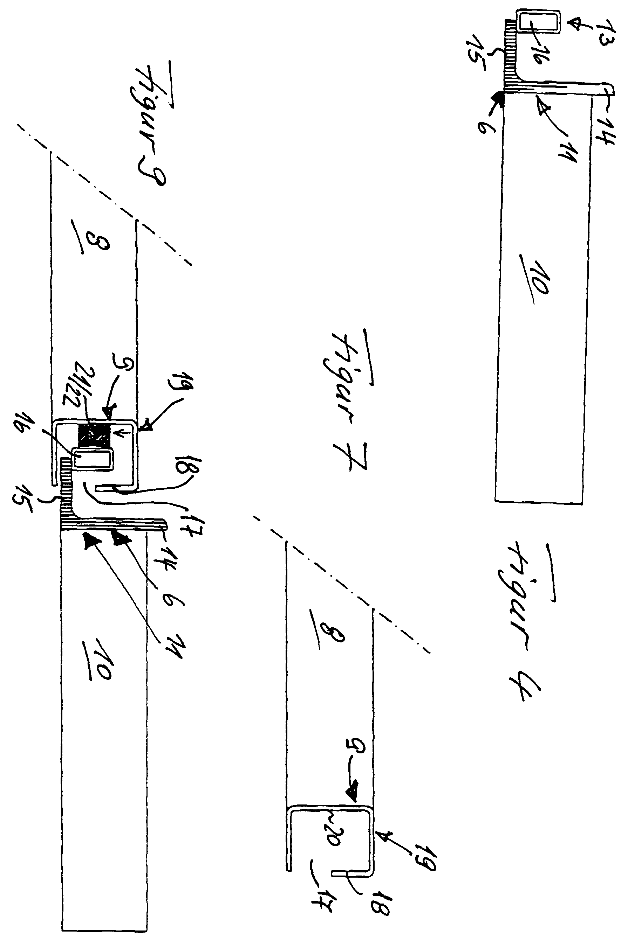

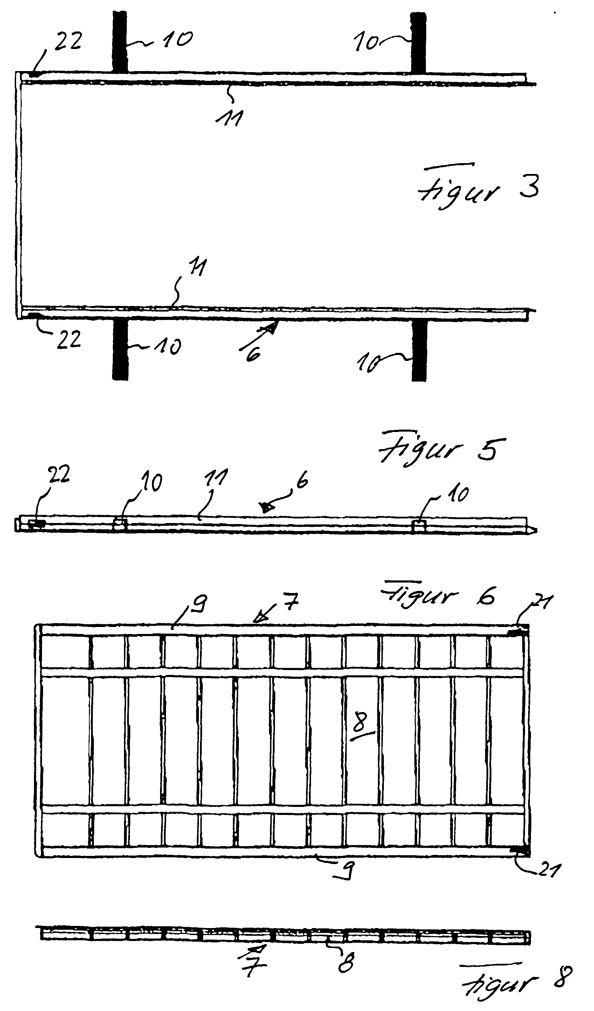

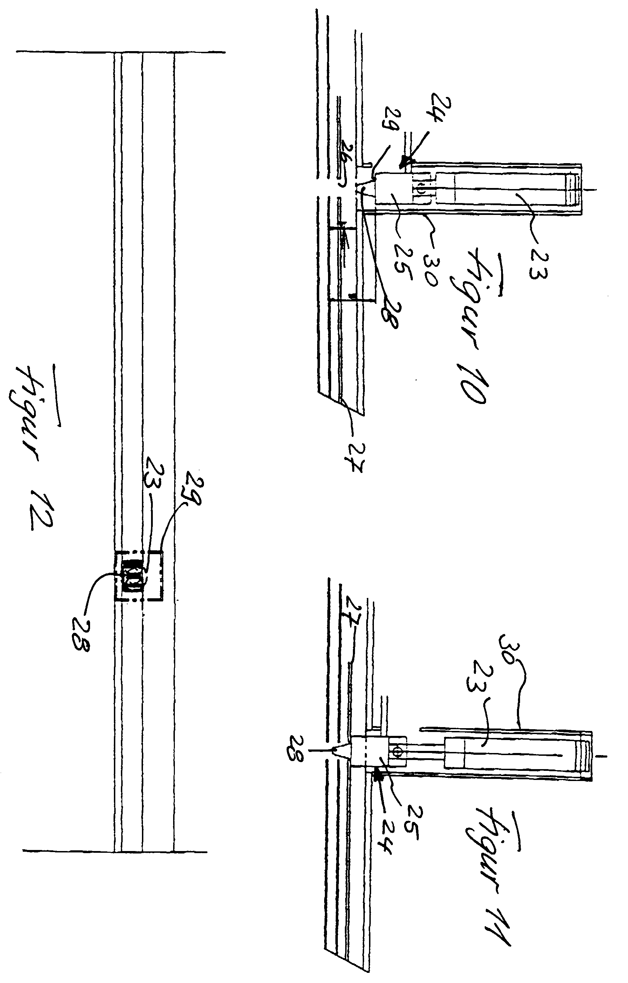

Das im Ausführungsbeispiel dargestellte Transportfahrzeug ist als Pick-up-Fahrzeug ausgebildet und weist ein Fahrerhaus 1 und einen über ein Fahrwerk (Räder) 2 gegen den Boden abgestützten, in der Draufsicht im Wesentlichen U-förmigen und nach hinten offenen Hinterwagen bzw. ein Chassis 3 auf, an welches vermittels einer durch Parallelogrammhebelpaare 4, 5 gebildeten, über wenigstens einen in der Zeichnung nicht besonders dargestellten Hydraulikzylinder antreibbaren Hubeinrichtung der fahrzeugseitige Teil 6 einer insgesamt zweiteiligen Lasttrageinrichtung angeschlossen ist. Der fahrzeugseitige Teil 6 der Lasttrageinrichtung ist durch einen in der Draufsicht U-förmigen Rahmen gebildet und vermittels der um horizontale Achsen schwenkbaren Hubhebel 4, 5 zwischen einer auf den Boden abgesenkten Lastaufnahmestellung und einer angehobenen Fahrstellung hin und her bewegbar. Der das erste Teil 6 der Lasttrageinrichtung bildende U-förmige Rahmen ist in der gezeigten Ausgestaltungsform der lichten Weite und Länge des Chassis entsprechend gestaltet und besteht wenigstens hinsichtlich seiner Längsschenkel aus einem Profilmaterial. Die das zweite Teil 7 der Lasttrageinrichtung bildende Lastplattform 8 ist ihrerseits mit einem wenigstens teilweise umlaufenden, d.h. einem sich wenigstens entlang ihrer Längsseiten erstreckenden , Rahmen 9 aus einem zum Profilmaterial der Längsschenkel des U-förmigen Rahmens 6 komplementären Profilmaterial versehen. Um in seiner in die Fahrstellung angehobenen Lage eine zusätzliche Aussteifung des Chassis 3 zu bilden ist der Lasttragrahmen 6 mit insbesondere aus der Darstellung der Figur 3 ersichtlich mit seitlich auskragenden Pratzen 10 versehen, über welche er in entsprechende Aufnahmen im Chassis 3 eingreift.
Bei der im Ausführungsbeispiel dargestellten Ausführungsform ist das die Längsschenkel 11 des U-förmigen Rahmens 6 bildende annähernd U-förmige Profilmaterial aus zwei Profilmaterialabschnitten, einem Winkelprofil 12 und einem im Querschnitt rechteckigen Profil 13 zusammengesetzt, in der Weise, daß ein den längeren Profilschenkel 14 und den Profilgrund 15 der annähernd bzw. ungleichschenkelig U-förmigen Profilquerschnittsform durch ein einteilig ausgebildetes, massives Winkelprofilmaterial und ein den kürzeren zum Eingriffin das unsymmetrisch C-förmige Profil des Rahmens 9 der Lastplattform 8 bestimmte Profilschenkel 13 durch ein an den freien Profilschenkel des Winkelprofilmaterials angeschlossenes Hohlprofil 16 gebildet sind. Das die Längsseiten des Rahmens 9 der Lastplattform 8 bildende und zum Profil der Längsschenkel 11 des U-förmigen Rahmens 6 komplementäre unsymmetrisch C-förmige Profil des Rahmens 9 der Lastplattform 8 ist in der gezeigten Ausführungsform durch ein eine zumindest schlitzförmige Ausnehmung 17 im unteren Bereich der bezüglich des Körpers Lastplattform 8 außenliegenden Seitenwand 18 eines quadratischen Hohlprofiles 19 gebildet ist. Mit seiner innenliegenden Seitenwand 20 ist das Hohlprofil 19 am Körper der Lastplattform 8 befestigt.
Neben den ineinandergreifenden Profilformen sind die Längsschenkel 11 und Rahmenteile 9 wechselweise mit Mitteln 21 bzw. 22 zum gegenseitigen Ausrichten in ihrer Eingriffslage ausgestattet. Die Mittel 21 bzw. 22 zum gegenseitigen Ausrichten der Profile von Rahmen 11 der Lasttrageinrichtung und Rahmen 9 der Lastplattform 8 sind durch insbesondere keilförmig ansteigende, in der Zeichnung lediglich andeutungsweise dargestellte Rampen gebildet und vom einen zum anderen Ende der Lasttrageinrichtung hin jeweils wechselweise an der Innenseite und der Außenseite der ineiandergreifenden Profilformen 9 und 11 angeordnet.
Wie im besonderen aus den Figuren 10 bis 12 ersichtlich sind an jeder Längsseite der Lasttrageinrichtung mechanische und formschlüssige Mittel zum Sichern der ineinandergreifenden Profilformen von Längsschenkel 11 und Rahmen 9 der Lastplattform 8 in ihrer gegenseitigen Eingriffslage vorgesehen und durch vermittels Druckmittelzylinder 23 angetriebene Stufenzapfen 24 gebildet. Die die formschlüssig wirkenden mechanischen Mittel bildenden Stufenzapfen 23 durchgreifen mit einem Schaftteil 25 eine Ausnehmung 26 in der oberen Profilquerwandung 27 des den Rahmen 9 der Lastplattform 8 bildenden Profiles, wobei der Schaftteil 25 zur Festlegung der miteinander im Eingriffbefindlichen Profile in vertikaler Richtung mit einer ringförmigen Stirnfläche 29 auf dem den kürzeren Profilschenkel des Lasttragrahmens bildenden Hohlprofil 16 aufsitzt und zur Festlegung der miteinander im Eingriffbefindlichen Profile in horizontaler Richtung mit ein zapfenförmiger Fortsatz 28 in das den kürzeren Profilschenkel des Lasttragrahmens bildende Hohlprofil 16 eingreift. Der Druckmittelzylinder 23 ist dabei insgesamt in einer Verkleidung 30 untergebracht und abgestützt.

## Patentansprüche

1. Transportfahrzeug mit einem über ein Fahrwerk gegen den Boden abgestützten, in der Draufsicht im Wesentlichen U-förmigen, nach hinten offenen Chassis und einer vermittels einer insbesondere durch Parallelogrammhebelpaare gebildeten, antreibbaren Hubeinrichtung an dieses angeschlossenen, aus zwei formschlüssig zusammenfügbaren und in der zusammengefügten Lage eine starre Einheit bildenden Teilen gebildeten Lasttrageinrichtung, wobei die Lasttrageinrichtung vermittels um horizontale Achsen schwenkbarer Hubhebel zwischen einer auf den Boden abgesenkten Lastaufnahmestellung und einer angehobenen Fahrstellung hin und her bewegbar ist, und wobei der das erste Teil der Lasttrageinrichtung bildender U-förmige Rahmen wenigstens hinsichtlich seiner Längsschenkel aus einem Profilmaterial besteht und die das zweite Teil der Lasttrageinrichtung bildende Lastplattform mit einem wenigstens teilweise umlaufenden Rahmen aus einem zum Profilmaterial der Längsschenkel des U-förmigen Rahmens komplementären Profilmaterial versehen ist,
dadurch gekennzeichnet,
daß die Längsschenkel des U-förmigen Rahmens aus Längenabschnitten eines eine annähernd U-förmige Querschnittsform aufweisenden Profilmaterials und die deren Längsseiten bildenden Teile des Rahmens der Lastplattform Längenabschnitten eines eine unsymmetrisch C-förmige Querschnittsform aufweisenden Profilmaterials bestehen.

2. Transportfahrzeug nach Anspruch 1, dadurch gekennzeichnet, daß das die Längsschenkel des U-förmigen Rahmens bildende ungleichschenkelig U-förmige Profilmaterial einen längeren die Tragfähigkeit des Profiles bestimmenden und einen kürzeren zum Eingriffin das unsymmetrisch C-förmige Profil des Rahmens der Last bestimmten Profilschenkel aufweist.

3. Transportfahrzeug nach Anspruch 1 und 2, dadurch gekennzeichnet, daß die unsymmetrisch C-förmige Querschnittsform des die Längsseiten des Rahmens der Lastplattform bildenden Profilmaterials durch eine zumindest schlitzförmige Ausnehmung im unteren Bereich der bezüglich des Körpers Lastplattform außenliegenden Seitenwand eines rechteckigen oder quadratischen Hohlprofiles gebildet ist.

4. Transportfahrzeug nach Anspruch 1 bis 3, dadurch gekennzeichnet, daß das die Längsschenkel des U-förmigen Rahmens bildende ungleichschenkelig U-förmige Profilmaterial aus zwei Profilmaterialabschnitten zusammengesetzt ist, in der Weise, daß der längere Profilschenkel zusammen mit dem Profilgrund der U-förmigen Profilquerschnittsform durch ein einteilig ausgebildetes, massives Winkelprofilmaterial und der kürzeres zum Eingriff in das C-förmige Profil des Rahmens der Lastplattform bestimmte Profilschenkel durch ein an den freien Profilschenkel des Winkelprofilmaterials angeschlossenes Hohlprofil gebildet sind.

5. Transportfahrzeug nach Anspruch 1 bis 4, dadurch gekennzeichnet, daß der kürzere an den freien Profilschenkel des Winkelprofilmaterials angeschlossene Profilschenkel durch ein hochkantstehend ausgerichtetes Hohlprofilmaterial mit rechteckigem Profilquerschnitt gebildet ist.

6. Transportfahrzeug nach Anspruch 1 bis 5, dadurch gekennzeichnet, daß die bestimmungsgemäß ineinandergreifenden Profile einerseits des U-förmigen Rahmens der Lasttrageinrichtung und andererseits des Rahmens der Lastplattform mit einem großen Übermaß ineinandergreifen und wechselweise mit Mitteln zum gegenseitigen Ausrichten in ihrer Eingriffslage ausgestattet sind.

7. Transportfahrzeug nach Anspruch 1 bis 6, dadurch gekennzeichnet, daß die Mittel zum gegenseitigen Ausrichten der Profile von Rahmen der Lasttrageinrichtung und Rahmen der Lastplattform durch insbesondere keilförmig ansteigende Rampen gebildet und vom einen zum anderen Ende des Rahmens der Lasttrageinrichtung hin jeweils wechselweise an der Innenseite und der Außenseite der ineinandergreifenden Profilformen angeordnet sind.

8. Transportfahrzeug nach Anspruch 1 bis 7, dadurch gekennzeichnet, daß die ineinandergreifenden Profilformen von Rahmen der Lasttrageinrichtung und Rahmen der Lastplattform in ihrer gegenseitigen Eingriffslage durch mechanische Mittel zumindest in einer horizontalen Ebene gesichert sind.

9. Transportfahrzeug nach Anspruch 1 bis 8, dadurch gekennzeichnet, daß die mechanischen Mittel zum Sichern der ineinandergreifenden Profilformen von Rahmen der Lasttrageinrichtung und Rahmen der Lastplattform in ihrer gegenseitigen Eingriffslage durch vermittels Druckmittelzylinder angetriebene Stufenzapfen gebildet sind.

10. Transportfahrzeug nach Anspruch 1 bis 9, dadurch gekennzeichnet, daß die mechanischen Mittel bildenden Stufenzapfen jeweils mit einem Schaftteil eine Ausnehmung in der oberen Profilquerwandung des den Rahmen der Lastplattform bildenden Profiles durchgreifenden und zur Festlegung der miteinander im Eingriffbefindlichen Profile in vertikaler Richtung mit einer ringförmigen Stirnfläche auf dem den kürzeren Profilschenkel des Lasttragrahmens bildenden Hohlprofil aufsitzen und zur Festlegung der miteinander im Eingriff befindlichen Profile in horizontaler Richtung mit einem zapfenförmigen Fortsatz in das den kürzeren Profilschenkel des Lasttragrahmens bildende Hohlprofil eingreift.

11. Transportfahrzeug nach Anspruch 1 bis 10, dadurch gekennzeichnet, daß der das erste Teil der Lasttrageinrichtung bildende, U-förmige Rahmen in an sich bekannter Weise mit seitlichen, die Längsseitenteile des Chassis des Fahrzeuges untergreifenden Ausladungen versehen ist.
